# EUROPEAN PATENT SPECIFICATION

(11) **EP 0 829 704 B1**
(45) Date of publication and mention of the grant of the patent: **16.11.2005**
(21) Application number: 97115617.9
(22) Date of filing: 09.09.1997
(51) Int. Cl.: G01C 21/20, G08G 1/0969

(54) **Information display system for vehicle navigation**
Informationsanzeigesystem für Fahrzeugnavigation
Système d'affichage d'information pour navigation de véhicule

(30) Priority: 13.09.1996 JP 24290496
(43) Date of publication of application: 18.03.1998
(73) Proprietor: Hitachi, Ltd., Tokyo 100-8280 (JP); Xanavi Informatics Corporation, Tokyo 143 (JP)
(72) Inventor: Fujiwara, Toshio, Hitachi-shi, Ibaraki 316 (JP); Fukunaga, Yasushi, Hitachi-shi, Ibaraki 316 (JP); Nakamura, Kozo, Hitachioota-shi, Ibaraki 313 (JP); Kurata, Ken'ichirou, Hitachinaka-shi, Ibaraki 312 (JP); Gunji, Yasuhiro, Hitachioota-shi, Ibaraki 313 (JP); Endo, Yoshinori, Mito-shi, Ibaraki 310 (JP); Okude, Mariko, Hitachi-shi, Ibaraki 319-12 (JP)
(74) Representative: Beetz & Partner

(56) References cited:
- EP-A- 0 785 535
- WO-A-96/00373
- US-A- 4 951 212
- ARIKAWA M: "PERSONAL DYNAMIC MAPS BASED ON DITRIBUTED GEOGRAPHIC INFORMATION SERVERS" PROCEEDINGS OF THE VEHICLE NAVIGATION AND INFORMATION SYSTEMS CONFERENCE, YOKOHAMA, AUG. 31 - SEPT. 2, 1994,31 August 1994, pages 591-596, XP000612712 INSTITUTE OF ELECTRICAL AND ELECTRONICS ENGINEERS
- FRANK D L: "INFORMATION SYSTEMS: AN INTEGRAL PART OF FUTURE VEHICLES" PROCEEDINGS OF THE VEHICLE NAVIGATION AND INFORMATION SYSTEMS CONFERENCE. (VNIS), TORONTO, SEPT. 11 - 13, 1989, no. CONF. 1, 11 September 1989, pages 85-88, XP000233016 REEKIE D;CASE E; TSAI J

## Description

### BACKGROUND OF THE INVENTION

The present invention relates to an information display system, especially relates to a navigation system providing a course guidance to a predetermined place by calculating a car's position and displaying the car's position with a map therearound on a display, said navigation system providing information for a user intelligibly by obtaining said information from a network like the internet from which various kinds of data are provided.

Navigation system shows a car's calculated position based on various sensor information on a display, with a map surrounding the car's position, by taking out map data stored in a CD-ROM, and by setting a goal position, and a course guidance to the goal position is shown on the display.

In the CD-ROM, various information necessary for a driving car, such as information about sightseeing spot or information of gas service station are inputted and indicated on the display according to a request of the user.

In this case, necessary information should be stored beforehand in the CD-ROM. As the CD-ROM is used only to be read out, it is not suitable for use as a medium to store information changing with time, for example, a traffic jam information. Even if it is assumed that a rewritable memory is used temporarily, it is troublesome for the user to input the information.

In order to solve such problem in the conventional navigation system, as shown by Japanese Patent Laid-open Nos. 7-105492(1995), 7-261661(1995), 8-139193(1996), or US-A-4 951 212 any communication equipment is provided in the car as a navigation equipment, and receives any facility data, so as to provide the information which is not provided by CD-ROM.

In order to communicate with a car, a means of mobile communication like a cellular telephone system needs to be used. However, data transmission speed of the cellular telephone system is slow, and further, when it is used by a running car, the channel of the cellular telephone system is easy to run out, and it is not suitable for sending a large quantity of data. Furthermore, when a driver of the car wants to see the information during driving, the driver is averted from his driving depending on the information display method, and it is dangerous for the driver. The information sent by a communication means should be capable to be accessed for convenience of the user, and a good acquisition method of the information is needed.

### SUMMARY OF THE INVENTION

Referring to the above stated problem, an object of the present invention is to provide a navigation system, by which much information is capable to be accessed so as to suitably control the amount of the information to be communicated and the received information is capable to be displayed intelligibly.

An navigation system is constituted with an information display equipment indicating information received through a mobile communication system, information offering equipment which obtains the information by connecting to a network and transmits the obtained information to the information display equipment, and a communication equipment.

The information offering equipment comprises a connecting means to be connected to the network and a memory means to store the information sent to the information display equipment, and obtains the information from information offering servers connected to a network and stores it in the memory means.

The information offering equipment comprises a retrieval means to retrieve the information to be provided to the user from the memory means furthermore, and a communication means to transmit and receive data with the information display equipment, thereby a kind of information demanded by the user from the information display equipment is received and the information retrieved from the memory means is transmitted to the information display equipment. In order to suitably control the amount of the data to be transmitted with the communications equipment, a data selection means and a data processing means are prepared at need.

The information display equipment comprises an input means to input a kind of the information that the user needs, and a communications means to transmit a retrieval key word input to the information offering equipment, or to receive the information provided from the information offering equipment. The information display equipment further comprises a map memory means to store map data, a map display means to retrieve the map data from the map memory means and to display the map on the display, and an icon display means to display an icon to a position where the information provided from the information offering equipment is stored, on the map displayed by the map display means. The information display equipment further comprises an icon select means by which a user selects the icon displayed on the display equipment, a retrieval means to retrieve the information about the selected icon from the information stored in a detailed information store means storing the information or the detailed information sent from the information offering equipment, and a detailed information display means to display the information retrieved to with the map on which an icon is displayed.

### BRIEF DESCRIPTION OF THE DRAWINGS

Figure 1 shows a constructive view of the navigation equipment to realize the present invention.

Figure 2 shows a constructive view of the information display equipment to realize the present invention.

Figure 3 shows a constructive view of the information display equipment to realize the present invention.

Figure 4 shows a view of hardware construction of the arithmetic processing department to realize the information display equipment.

Figure 5 shows a functional construction figure of the arithmetic processing department to realize the information display equipment.

Figure 6 shows a function construction figure of the arithmetic processing department to realize the information display equipment.

Figure 7 shows a function construction figure of the arithmetic processing department to realize the information offering equipment.

Figure 8 shows a view which shows the retrieve screen.

Figure 9 shows a view which retrieves by using a phone number.

Figure 10 shows a view which sets an item retrieved with precedence.

Figure 11 shows a view which displays a retrieval range.

Figure 12 shows a view which shows the range retrieved with an acquisition time.

Figure 13 shows a view which shows a retrieval range when retrieving along with a path.

Figure 14 shows a view which shows an example of a fixed form format.

Figure 15 shows a view which shows an example of a free format.

Figure 16 shows a view which displays an icon contained by the information.

Figure 17 shows a view which shows an operation in which icons do not overlap.

Figure 18 shows a view which shows location of the information with an icon on the map top.

Figure 19 shows a view which shows the individual information by changing property of the icon.

Figure 20 shows a view which displays detailed information of an icon selected.

Figure 21 shows a view which displays detailed information of an icon selected with the map.

Figure 22 shows a view which shows that detailed information are divided to be displayed into several pages.

Figure 23 shows a view which shows to come back to a former screen after offering the information.

### DETAILED DESCRIPTION OF THE PREFERRED EMBODIMENTS

The information provided to the user is sent from an information offering server through a network to information offering equipment, and the information that has been sent is stored in a memory equipment so as to be provided according to request of the user. When the user requests to be offered the information, the information is retrieved from this memory equipment by a retrieval condition of the user, and is transmitted to the information display equipment.

In the information offering equipment, data which should be transmitted to the information display equipment are selected and processed furthermore. The information requested by the user and transmitted to the information display equipment from the information offering equipment is displayed with an icon to the position on the map where the information is stored. When one of the icon displayed by operation of the user is selected, the detailed information which relates to the icon is displayed.

Referring to following figures, one embodiment of a navigation system having information offering equipment in this invention will be explained.

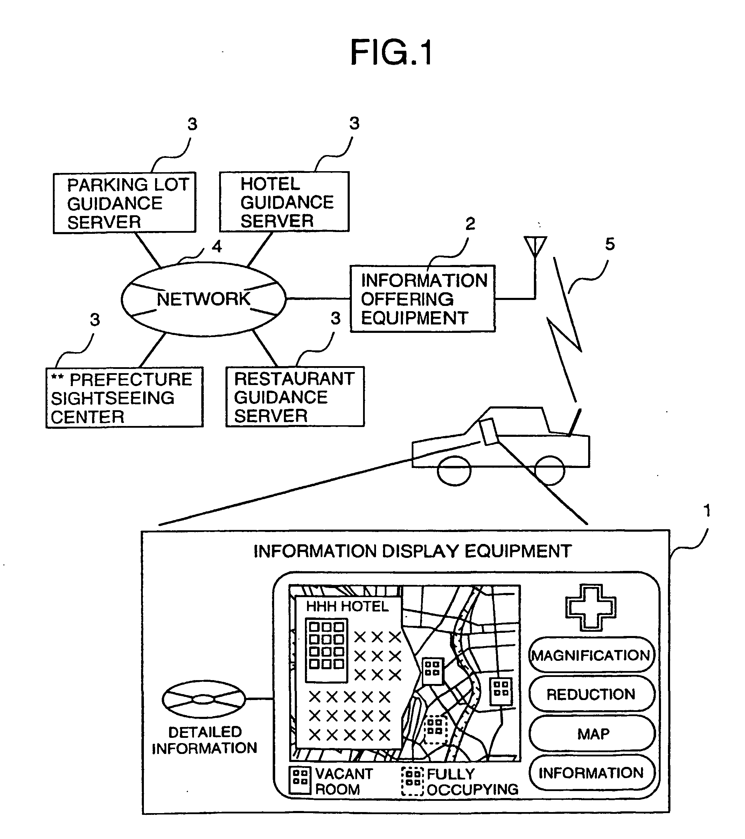

A navigation system in this embodiment as shown in Fig. 1 has information offering equipment 2 to obtain various information from an information offering server 3 connected through a network 4 such as the internet, and to provide it to a user, and an information display equipment 1 to display a car's position, to provide course guidance to the car, and to provide a presentation of the information from the information offering equipment 2 etc. according to the request of the user.

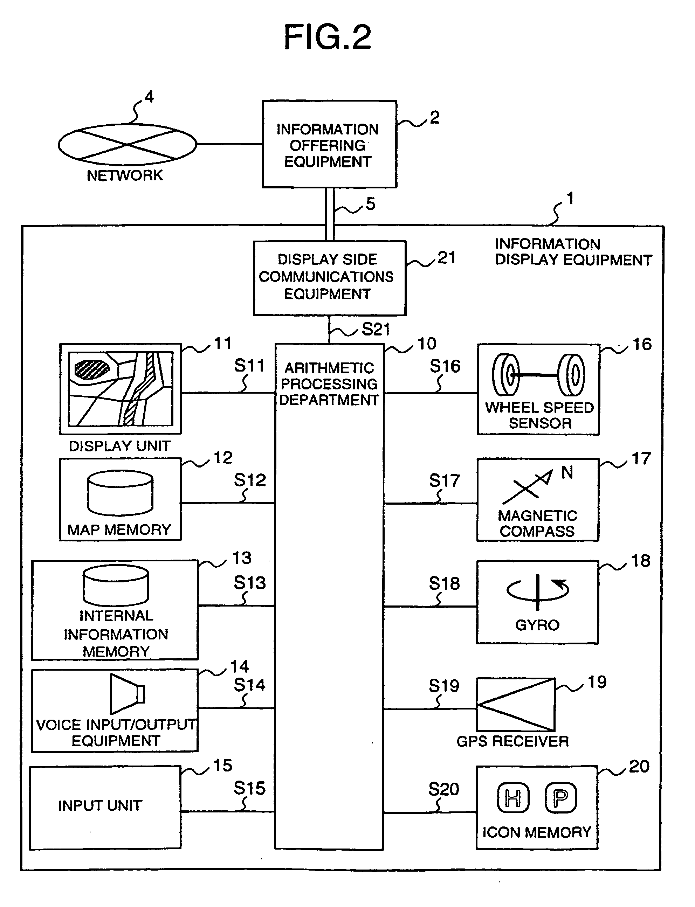

The information display equipment 1 will be explained using Fig. 2.

The information display equipment 1 has an arithmetic processing department 10, a display unit 11, a map memory 12, an internal information memory 13, a voice input and output unit 14, an input unit 15, a wheel speed sensor 16, a magnetic compass 17, a rate gyro 18, a GPS receiver 19, an icon image memory 20 and a display side communication equipment 21.

The arithmetic processing department 10 has a means to calculate a current position of a moving body like the car in which the navigation equipment is installed by using the information output from the above sensor 16,17,18 and the GPS receiver 19, and a means to select a most suitable road which connects current position with a goal position directed by the user and to notify them by using a sound and graphic display to the user.

The arithmetic processing department 10 sets a display domain according to the calculated current position of the moving body or scroll operation by the user, reads out the map data corresponding to the display domain from the map memory 12, provides graphic information from the map data which are read out, and performs a graphical processing so as to display it on the display unit 11. When the current position is displayed, the current position of the moving body is displayed by a mark with a graphics information corresponding to the map showing the neighborhood of the current position.

The display unit 11 is a unit to display the graphics information formed by the arithmetic processing department 10, and is constructed with a cathode ray tube or a liquid crystal display. The arithmetic processing department 10 is connected to the display unit with a signaling S11 such as Red Green Blue signaling or NTSC signaling. The map memory 12 reads out / writes in necessary data from a storage media such as a CD-ROM or an integrated circuit card by receiving outside indication.

The voice input and output unit 14 converts a message to be transmitted to the user, into a voice signal, and recognizes a voice generated by the user so as to transmit it to the arithmetic processing department.

The input unit 15 is a unit to accept indication from the user, and it is constructed with, for example, a joy stick to allow scrolling the map indicated, an electric switch such as a button, a touch panel put on the display unit etc.

The wheel speed sensor 16 measures the moving distance of the moving body from a product of the circumference of a wheel of the moving body and revolution speed of the wheel, and measures the turning angle of the moving body from difference of revolution speeds between a pair of wheels. The magnetic compass 17 detects a geomagnetic field, and measures a direction where the moving body faces. The gyro 18 has an optical fiber gyro or a vibration gyro, and measures the turning angle of the moving body when the moving body turns.

The GPS receiver 19 receives a signaling from GPS satellites and calculates a current position, a moving angle and a moving direction of the moving body by measuring distance and between the moving body and satellite and a change rate of the distance relating to three or more satellites. These sensors and equipment as above are used in order to detect the current position of moving body by a navigation processing.

The icon image memory 20 stores images of icons which is used when the information got from the information offering equipment 2 is displayed on the map.

Said internal information memory 13 memorizes various kinds of information to offer to the user, and most of the information is static information which are updated with a low frequency, for example, information of a sightseeing spot, information of a gas station, guide information of the accommodations or leisure facility, and tariff information of a toll road . Here, the navigation system in the present invention has a function to offer the information depended on a map fundamentally in addition to above and there is location on a map equivalent a lot of said information to be offered. In other words, most of them are individual information that have location information which respectively correspond with the locations on the map, and the individual information is offered by appointing the location on the map, and the location of selected individual information are indicated on the map top as explained in the following.

The display side communication device 21 communicates with the information offering device 2, and obtains the information from the information offering device 2, which mainly changes with time and are updated with a high frequency, for example, traffic jam information of a road, vacant information of a hotel and a parking lot, weather information, and sale information of a store, as explained in the following. The information provided in this way from the information offering device 2 are individual information having the location information respectively corresponding to locations on the map in the same way as the individual information memorized in the internal information memory 13. The communication volume which is most suitable for the mobile communication that is one of the most distinctive characteristics of the present invention is determined by controlling not to send the information which are able to be stored by the internal information memory 13 and are not updated frequently. As it is possible to select the individual information which is related to the individual information sent by the information offering device 2, according to the location on the map, from the individual information memorized in the internal information memory 13, the sufficient information is offered while communication channel capacity is low, by combining the individual information to be related according to the necessity.

In this embodiment of the present invention, the memory is sorted into the map memory, the internal information memory, and the icon image memory according to the kind of the information to be stored, however, it is possible to store plural kinds of the information with one memory.

In addition to above, in this embodiment of the present invention, the memory consists of the map memory, the internal information memory, and the icon image memory according to a kind of the information to be stored, however one of the memories may store several kinds of the information.

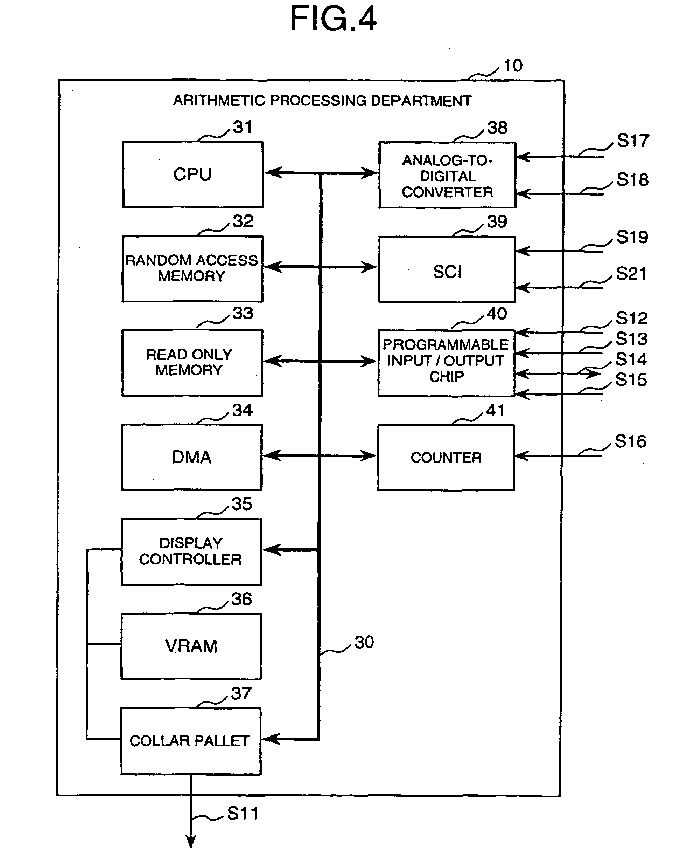

For example, as shown in figure 4 as a hardware construction, the arithmetic processing department 10 is comprised of a central processing unit 31 to control the calculation and each device, a random access memory 32 to store the map data and calculation data temporarily, a read only memory 33 to store the system program, a DMA 34 to execute each data transfer between one memory and other memory at high speed and between the memory and each device, a display controller 35 to execute and indicate graphics information generation as to develop vector data in an image at high speed, a VRAM 36 to save graphics image data, a color pallet 37 to convert the image data into Red Green Blue codes, an analog-to-digital converter 38 to convert an analog signal into a digital signal, a SCI 39 to convert a serial signal into a parallel signal, a programmable input-output chip 40 to synchronize with the parallel signal and so as to output on the bus 30, a counter 41 to count pulse signal, and said bus 30 to connect between every devices.

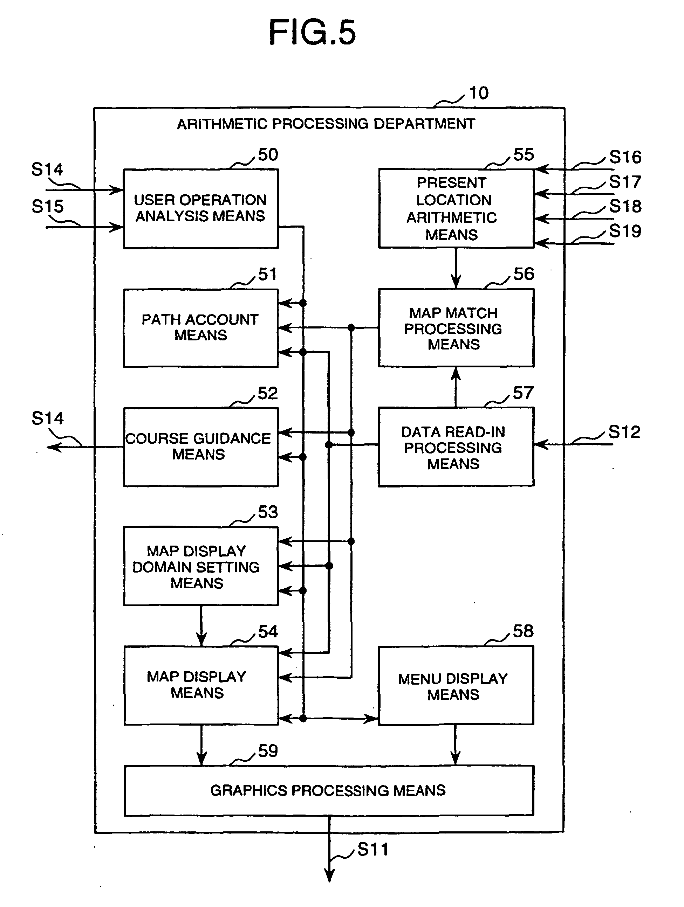

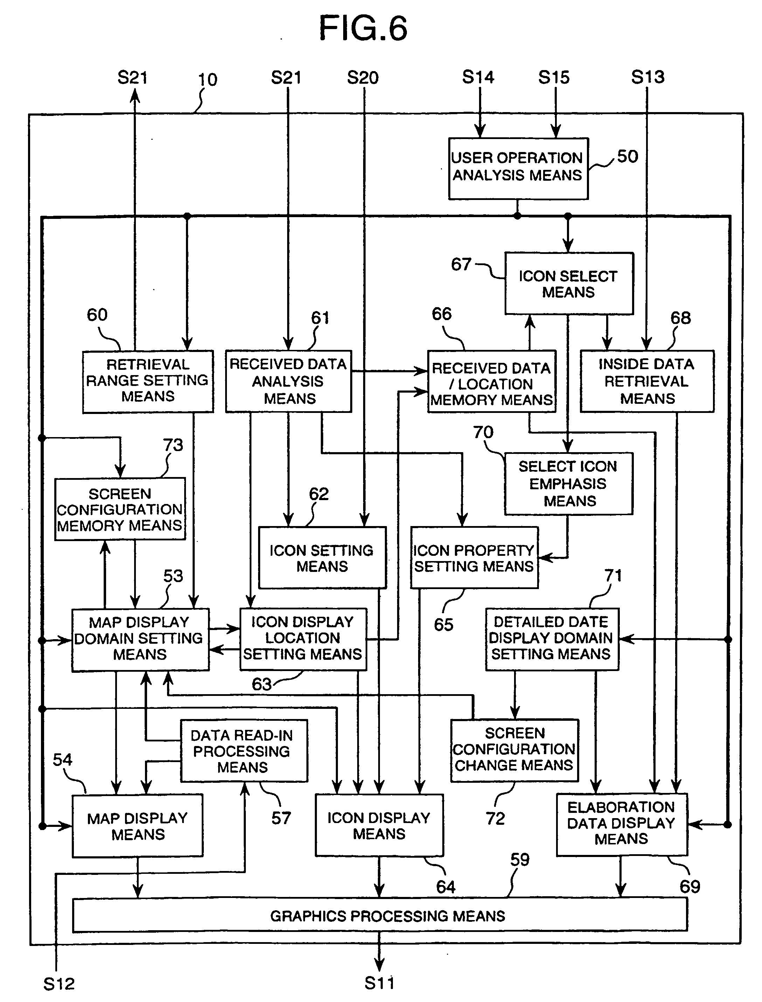

Construction of the arithmetic processing department 10 will be explained using figure 5, and figure 6.

As shown in figure 5, the arithmetic processing department 10 is comprised of a user operation analysis means 50, a path account means 51, a course guidance means 52, a present position arithmetic means 55, a map match processing means 56, and a menu display means 58, as a means mainly relating to a navigation processing such as car*'*s position calculation and course guidance.

The present position arithmetic means 55 respectively integrates distance pulse data measured with the wheel speed sensor 16 and angular acceleration data measured with the gyro 18, and calculates a position (X', Y ') of the moving body moved from an initial position (X, Y) by integrating the distance data and the angle data during one fixed cycle time obtained by the above calculation. Furthermore, in order to set an initial value of advance direction of the moving body, a relationship of an angle data provided from the gyro 18 and an absolute direction is set by using the directional data provided from the magnetic compass 17.

Furthermore, the present position arithmetic means 55 outputs current position information after having revised the sensor data with the position data provided from the GPS receiver 19 by a predetermined cycle time, thereby a sensor error to be accumulated is canceled by integrating the data provided from the sensor as stated the above.

Generally speaking, in the present position information provided in this way, error of the sensor may be still contained. On this account in order to raise position accuracy furthermore, a next map match attention is performed by the map match processing means 56.

The map match processing compares a road data contained in the map around the current position read in by a data read-in means 57 with a traveling trace obtained from the current position arithmetic means 55, thereby the current position is processed to match to the road where the mutual shape relation becomes highest . By applying this map match processing in most case, the current position comes to correspond with the traveling road and the present position information may be output accurately.

The user operation analysis means 50 receives various operations requested from the user with the input unit 15, and controls the each unit contained in the arithmetic processing department 10 so as to execute the processing corresponding to the request of the user.

For example, when the user requests the course guidance to the goal position, a processing to operate a path from the current goal position to the goal position is requested to a path account means 51, and the information to guide path to course guidance means 52 is requested to be shown to the user. When the user requests a scroll operation of the map which is displayed through the input unit 15 furthermore, a scroll display of the map domain designated is requested to a map display means 54.

The path account means 51 decides an guidance path between two spots by retrieving a node connecting an interval between two spots (the present position and goal position) designated using Dijkstra algorithm. When determining the path, for example, a path in which the distance between two spots becomes shortest, a course by which it becomes possible to arrive with a shortest time, a path by which a cost for it becomes the most economical etc., are provided by using different retrieval conditions.

The course guidance means 52 compares a link information of guidance path obtained by the path account means 51 with the present position information obtained by the position arithmetic means 55 and the map match processing means 56, and notifies to the user whether the car should turn to right or left, or go straight with a sound by using the sound input and output unit 14 before passing an intersections or by displaying the course for the car on the map on the display unit 11.

The menu displaying means 58 receives a command output from the user operation analysis means 50, and the command for displaying various kinds of a requested menu is sent to the graphics processing means 59.

The arithmetic processing department 10 has a data read-in means 57, a graphics processing means 59, a map display domain setting means 53, and a map display means 54 furthermore.

The map display domain setting means 53 sets a map domain that should be displayed according to an algorithm determined beforehand from the present position of the moving body output, from the map match processing means 56, or from a scroll information about a scroll direction corresponding to scroll operation input through the user operation analysis means 50.

The data read-in means 57 selects to read out the map data of the display domain which is set from the map memory 12.

The map display means 54 sends a command to display a designated object for the map data read out, with a designated contraction scale, in a state keeping a designated direction to an upper direction of the display unit 11, to a graphics processing means 59.

A graphics processing means 59 receives the display command formed by the map display means 54 and the menu displaying means 58, and applies the graphics image in the VRAM 36. The graphics image applied to the VRAM is managed with a collar numbering, and after being converted into RGB corresponding to the collar numbering with the collar pallet 37, it is displayed by the display unit.

As shown in figure 6, the arithmetic processing department 10 comprises a retrieval range setting means 60, a received data analysis means 61, an icon setting means 62, an icon display position setting means 63 and an icon display means 64 furthermore, as a processing means in a navigation system to optimize amount of the information to be communicated and to display the information received intelligibly in this invention.

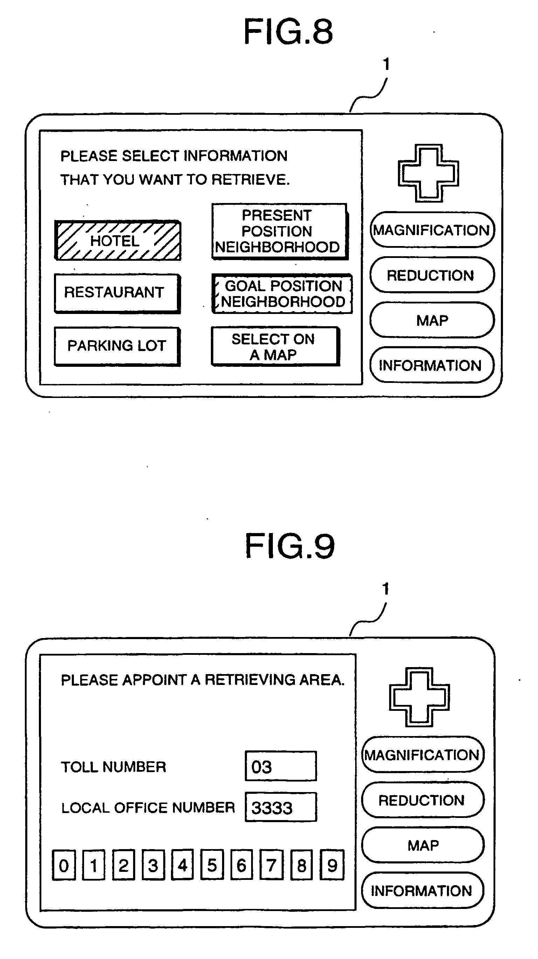

The retrieval range setting means 60 sets one or more items selected by the user from items shown by the menu display means 58 as a retrieve object property, and sets a specification spot on the map provided from the scroll information as a center of the retrieve neighborhood, said scroll information relating to the present position of the moving body output from the map match processing means 56, the goal position of the moving body input through the user operation analysis means 50 or the direction of the scroll corresponding to the scroll operation input through the user operation analysis means 50, and set a size of the retrieve neighborhood in a value decided beforehand furthermore. The retrieve object property, the center of the retrieve neighborhood and the size of the center set in this way are sent to the information offering equipment 2 by using the display side communication equipment 21. An example to set the information which is retrieved by the user on the menu screen by using figure 8.

The center of retrieve neighborhood which is set may be set by using the information specifying a spot, elsewhere it is set from a position on the map. For example, phone number and a position of the information or an address stored in the internal information memory 13 are used. Input of the addresses is performed by using a letter input means, a place name select means chosen from a place name list, or a sound recognition means. An example of a method to set the center of the retrieve neighborhood by inputting the phone number will be shown in figure 9.

The retrieve neighborhood that is set may be set based on the domain and the contraction scale of the map displayed on display unit 11. For example, when the user is going to obtain the information, the map domain displayed by the display unit 11 may be used as the retrieve neighborhood.

In the above embodiment of the present invention, the size of the retrieve neighborhood is set by the information display equipment, however it may be set by the information offering equipment. For example, referring to amount of the information sent to the information display equipment, it may be determined to be a range near to the center of the retrieve neighborhood. Further by providing a means to set intention by the user, suitable amount of the information may be set according to the user's intention.

In configuration of the above embodiment, area size of retrieval neighborhood is set with the information display, however, it is possible to set it with the information offering device. For example, considering amount of the information to send to the information display, the area size is set so that suitable amount of the information is obtained by selecting area sequentially near to the center of retrieval neighborhood. Furthermore, by providing a means for setting taste of the user, it may be set so that the amount of the information becomes suitable sequentially selecting the tasted information.

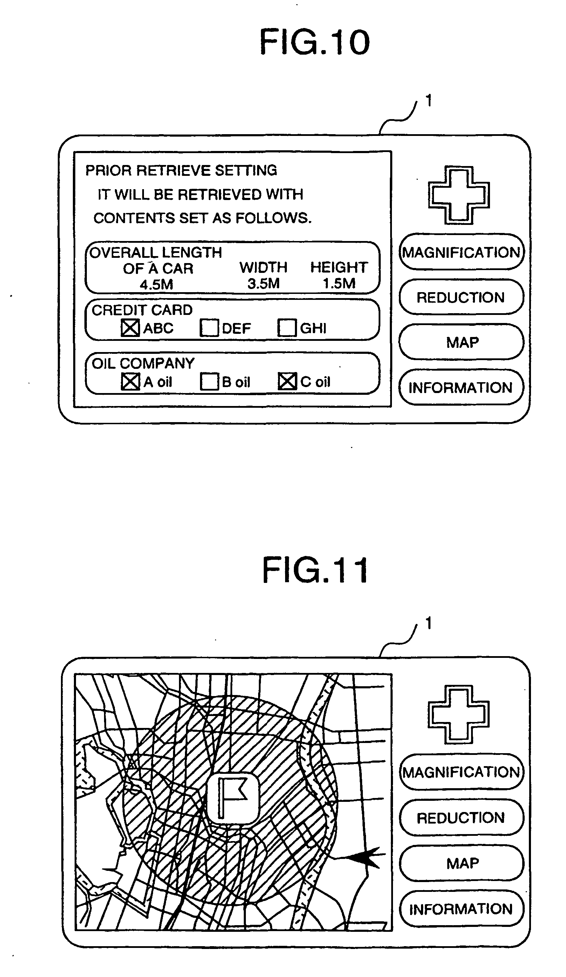

In the above embodiment, the retrieval range that the retrieval entry means 60 sets, in other words, the key word for retrieving, is retrieval object property, center of the retrieval neighborhood, or size of retrieval neighborhood, however, as it becomes a premise that it is on business or it may be utilized when information is demanded for the user, business hour information and vacant information may be automatically selected as the search conditions. When such search conditions are used, the information provided by the retrieval becomes to include the dynamic information that is changed with the time. For example, when it is applied to the retrieval of a service station, as the service station in business becomes retrieval object at retrieval point in time, it becomes possible to understand whether it is on business or not before going there actually, it becomes good beneficial information for the user. Of course, as unnecessary information is not communicated, the communication line capacity may be reduced. When hotel and ferry information are searched in the same way, date to utilize may be set, thereby search condition as that there is vacant on the date is automatically set. Furthermore, information of the car which the user uses or taste information of the user may be set as the search condition. For example, when ferry and parking lot information are searched, size information of the car may be stored to be set. When restaurant and service station information are searched, credit card information that the user may utilize and chain store information that the user utilizes willingly may be set. In these cases, smooth information offering becomes possible for the user, reduction of communication line capacity becomes possible simultaneously, too. Of course, retrieval information described as above may be combined. These information are set by providing the setting means whenever the information is going to be obtained from the information offering device 2, however, they may be set automatically by preparing the means which will be registered itself with beforehand. An example to set the taste of the user is shown in Fig. 10.

A retrieval range display means may be prepared in order to show the retrieve neighborhood set as the above, and By displaying the retrieve neighborhood, it becomes possible to easily recognize the range of the map on which the information to obtain belongs. In figure 11, when the goal position neighborhood is the retrieve neighborhood, an example that displays the retrieve neighborhood with a circle is shown. In addition to above, a triangle mark in figure 11 shows the present position, and a flag mark shows the goal position, and they are shown in the same way in the following figures.

When the information obtained at the past is provided, if a temporary memory means to store it and the retrieval range displaying means to display the retrieve neighborhood of the information stored are prepared, the amount of the communication with the information offering equipment may be reduced, as the information is judged to be in the information display equipment even if the information offering equipment isn't accessed.

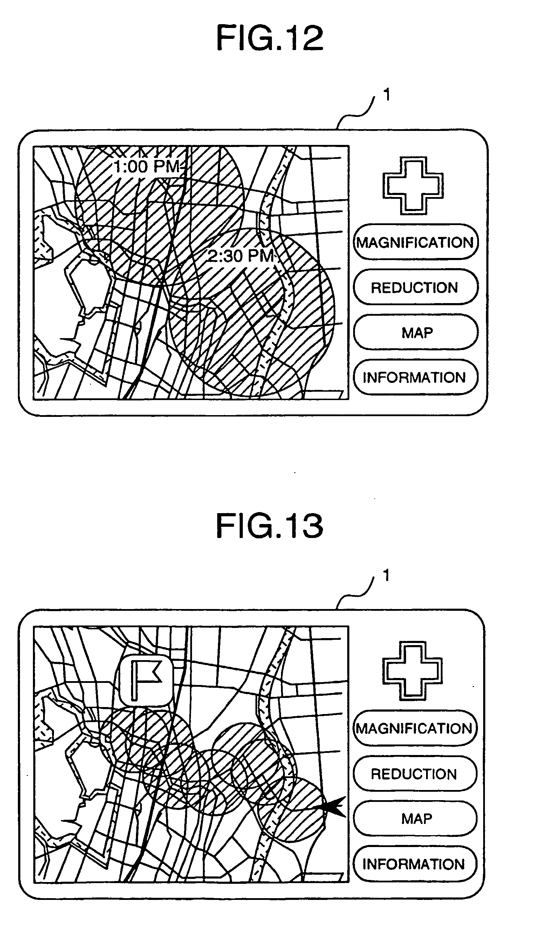

When the Information which received at the past is displayed, a time when receiving said information in said temporary memory means is displayed with retrieve area by the retrieval range display means, whether said information should be obtained from said information offering equipment may be referred. An example of a case that the retrieve area of information received at the past is displayed with the time when received it is shown in Fig. 12. If the information stored in said temporary memory means in addition to above is constructed to be erasable on a predetermined time point when the user ordered it or when a predetermined time interval has passed after the power source is switched off or the information is obtained, the information which should be stored may be prevented from becoming infinitively large.

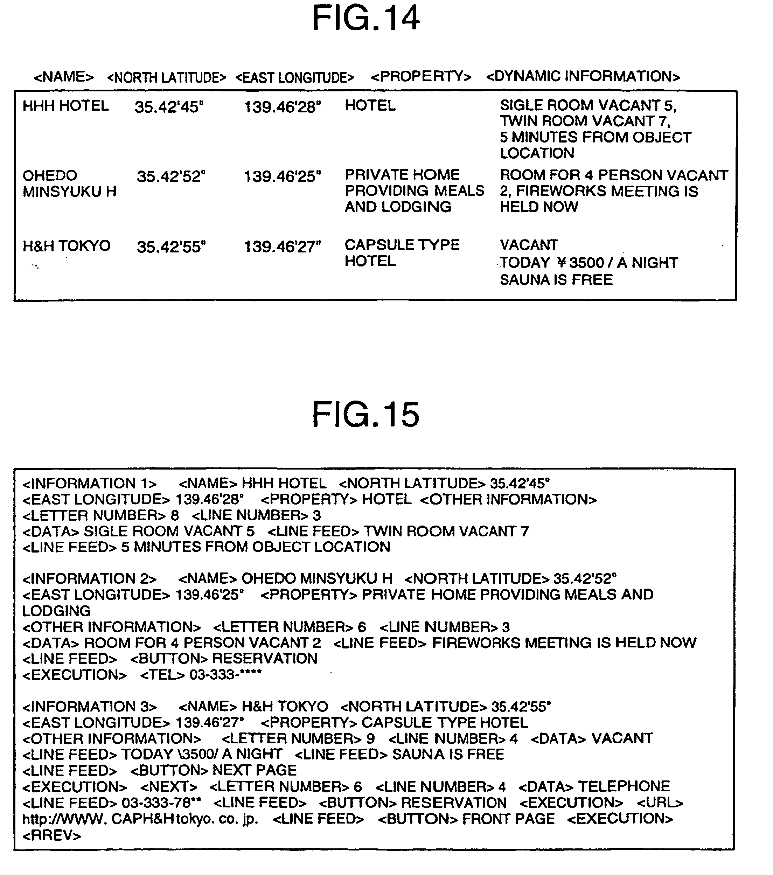

In the above embodiment, the center of retrieve area is one, however, such center may be set to be plural. For example, when the several nodes which connect the goal position with the present position are set as the centers of every retrieve areas, it looks like as that the information along a course is referred to. In other words, a problem as that the user demands the information many times in order to get the information on path, disappears. When the nodes in the path from the present position to goal position shown with a thick line are determined to be the centers of the every retrieve areas, an example representing the domain that became a range to be retrieved actually is shown in Fig. 13.

A received data analysis means 61 analyzes data to be provided through the display side communications equipment 21, selects several information contained by said data, and takes out information necessary for an afterward processing, for example, name, location on a map, property, affiliated information contained by respective information. In analysis of data, it is necessary to know with what kind of form the data stores the information. As an example, a case storing the information with an order decided beforehand is shown by Fig. 14. As an other example, a case that the form of the data is contained in the data is shown by Fig. 15. In the example shown in Fig. 15 in addition to above, by utilizing that the name, the location, the property are stored from the top by this order, they are stored with the form decided beforehand, the data form may be to be specified in the data regarding only the affiliated information.

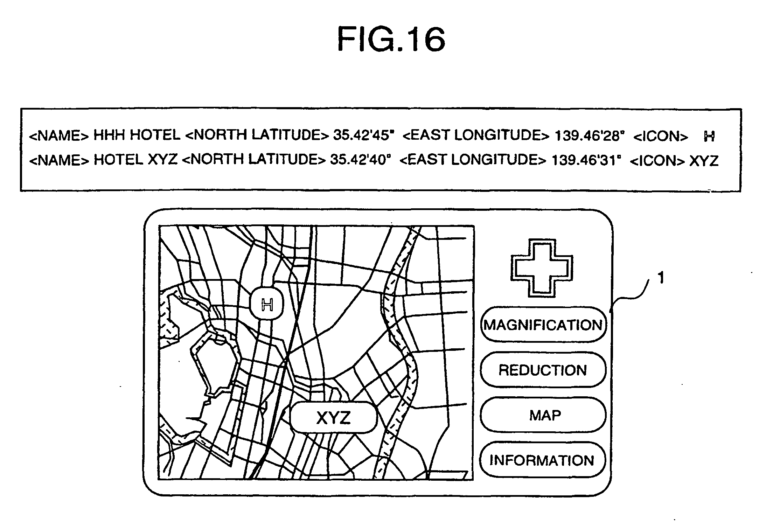

An icon setting means 62 takes out a corresponding icon from the icon memory based on the property taken out with the received data analysis means 61 so as to set it as an icon showing represence of the information. The icon setting means 62 further has an icon presence judgment means which judges whether the corresponding icon exists in the icon memory 20, and when the corresponding icon does not exist in the icon memory 20, the icon setting means 62 may require to transmit the corresponding icon to the information offering equipment 2. Otherwise, a means to add a letter or an icon such as an emblem to the information sent from the information offering equipment 2 are prepared and the icon may work may be taken out from the information sent in this way. Then, if an information to show an existence of the icon with the information sent is constituted to be sent simultaneously, it is understood easily that the icon corresponding to the information sent is contained. Figure 16 shows an example of the equipment which displays the information containing the icon which has been sent from the information offering equipment and the icon on a map based on this information.

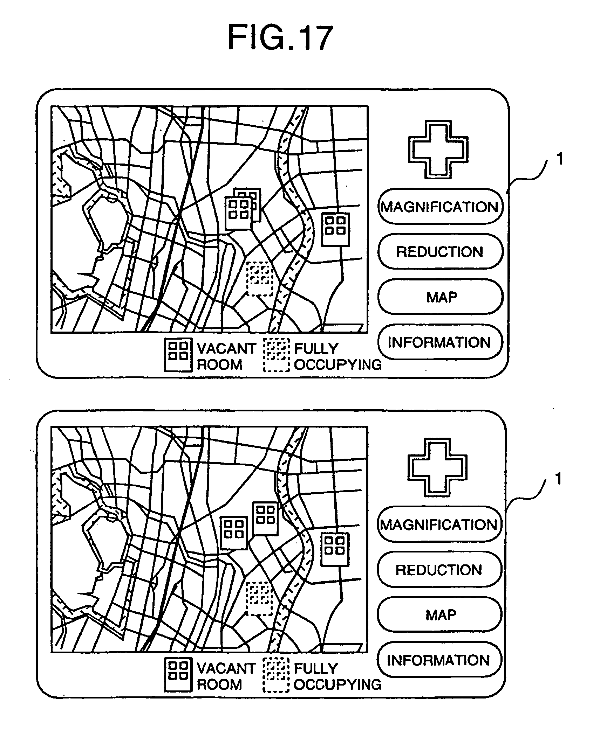

A icon drawing location setting means 63 sets a location of the icon so that the corresponding information are displayed on a suitable location of the map based on a location information on the map taken out with the received data analysis means 61 and an information from the map display domain setting means 53. When reduction scale of the map changes or the map is scrolled, the location of icon is adjusted again suitably. If the data which have been sent are just indicated on the map, the icons are overlapped or the information isn't settled within a screen of the display sometimes. In such a case, for example, the reduction scale of the map by which the information sent is settled in the same screen is obtained to be notified to the map display domain setting means, and resetting of the location displaying the icon may be done according to the reduction scale changed. An embodiment avoiding the overlap of the icons will be explained in the next. A overlap judgment means to judge the overlap of the icons is provided, and when it was decided that the icons will overlap, the overlap information is notified to the icon display location setting means, and the icons are set so as not to overlap mutually by adjusting the displaying location of the icons overlapped with the icon displaying location setting means. Figure 17 is an example in which overlap of the icons is avoided by resetting of the location of the icons when the two icons are overlapped. In a case of this example, actually, the display of the icons overlapped needn't be done, however, it is shown for describe the operation. An other method to avoid overlap of the icons may be adopted by, for example, changing the reduction scale of the map, or changing size of the icon.

A icon display means 64 sends a command which displays an image of the icon set by the icon setting means 62 to the graphics processing means 59 at a location set by the icon display location setting means 63.

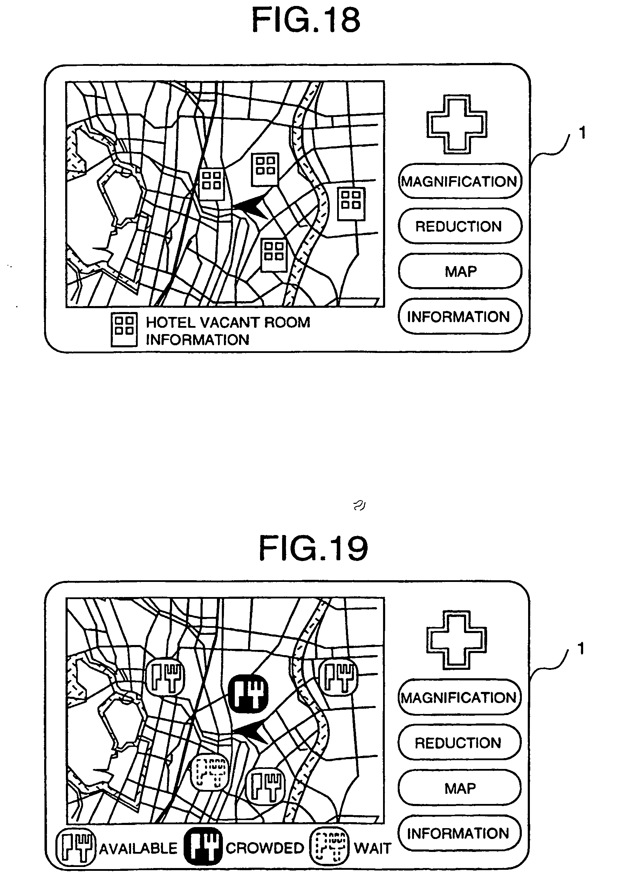

An example in which the information received from the information offering equipment 2 is displayed with an icon on the map by using above-mentioned construction is shown by figure 18.

In the above embodiment, as the information sent from the outside is shown with an icon on the map, the user easily understands the location of the information that has been sent. While making use of this feature, furthermore, in order to provide an individual information, an icon property setting means 65 may be provided furthermore as shown in the following.

The icon property setting means 65 sets property of an icon such as color and size, intensity, chroma, light on / light off, display / non display, based on information taken out with the received data analysis means 61. And, the icon display means 64 displays the icon based on the property set by the icon property setting means 65. When it is done in this way, the individual information besides the location of the information according to a color of the icon for example, may be displayed. An example will be explained using figure 19 in which received data are information about restaurant and the property of their color is set. For example, an icon of a restaurant which is not crowded is shown by blue (white in Fig. 19), an icon of a restaurant which is available if waiting a little, is shown by yellow (black in Fig. 19), and an icon of a restaurant which is not available if waiting a little, is shown by red (dotted line in Fig. 19). When the restaurant is not available if waiting a little, it is meaning-less that the property may be turned into non- display (transparent color).

An arithmetic processing department 10 relates to a navigation system processing to control amount of the information to be communicated so as to be suitable by the present invention furthermore, and to display the received information intelligibly, and has a received data /location memory means 66, an icon select means 67, an inside data retrieval means 68 and a detailed data display means 69.

The received data / location store means 66 stores each information provided by the received data analysis means 61, and the location at which the corresponding icon should be displayed is obtained from the icon display location setting means 63 and is stored with each related information.

The icon select means 67 decides which of the icon is selected by the location and the received data / location memory means 66 when detecting that the user selects one part of the screen by the user operation analysis means 50. Then, if the icon selected is decided, the information corresponding to the icon is retrieved from the received data / location memory means 66 and is transmitted to the inside data retrieval means 68.

By transmitting the location data of the icon selected with the icon select means to the path account means 51, a course guidance processing to go by way of the location with the icon which the user has selected becomes possible.

As means to detect that the user selects one part of the screen, some methods are proposed as following. For example, a pointing device such as a touch panel having many pressure sensors on the screen is provided so as to be set so as to overlap on the screen. Otherwise, a cursor display means for displaying a cursor on the map, a cursor movement means to let the cursor moved, a cursor location acquisition means to calculate the location of the cursor on the map by detecting a quantity of movement of the cursor moved by the cursor movement means, and a means to recognize the determination of the user are prepared, and the user decides after the user let the cursor moved, thereby the location selected by the user is detected. Movement of the cursor is performed by moving the cursor for the screen while keeping the map fixed, or by moving the map for the screen while keeping the cursor fixed. In the case that the cursor displayed in this way is used, the icon may be recognized to be selected by detecting the location of the cursor provided by the cursor location acquisition means, on a specified icon, or the icon being most near from the cursor when a distance between the each icon and the cursor is compared with, or the icon being most near from the cursor when a distance between the each icon and the cursor is compared with and it is less than a predetermined set value may be selected. Further, one more example of the detecting means will be explained as following. Providing a button having a tabulation function in an input means, the icon which the user wishes to select may be obtained by changing one display property of the icon which is displayed whenever the button is pushed. The icon which changes display property may be selected sequentially from the center of the screen, or by using the cursor movement input means, the icon almost being in cross course may be selected in the next selection.

The inside data retrieval means 68 obtains a receipt information corresponding to icon selected by the icon select means 67, the detailed information related to this receipt information is retrieved from the internal information memory 13. As mentioned above, referring that most of the information that the navigation system utilizes are the individual information that have the location information on the map, the individual information having the location information same as the location information on the map corresponding to the selected icon may be retrieved from the internal information memory 13. Even if they are individual information to be related to in addition to above, the locations which should be the same each other on the map may not be equal strictly because of error which occurs on the data processing. In this case, for example, the information of the location which is in a distance within error degree being allowed and in the nearest location is selected as the individual information to be related. Moreover, when the location on the map of the individual information is represented with the area, the overlapped areas are selected as the individual information to be related. Methods to search the individual information to be related are provided easily in the same way as above, for example, the title included in the receipt information may be searched as the key word, and the information common to the receipt information and the information from the internal information memory 13 such as serial number, phone number, and address may be set as the key word for the retrieval.

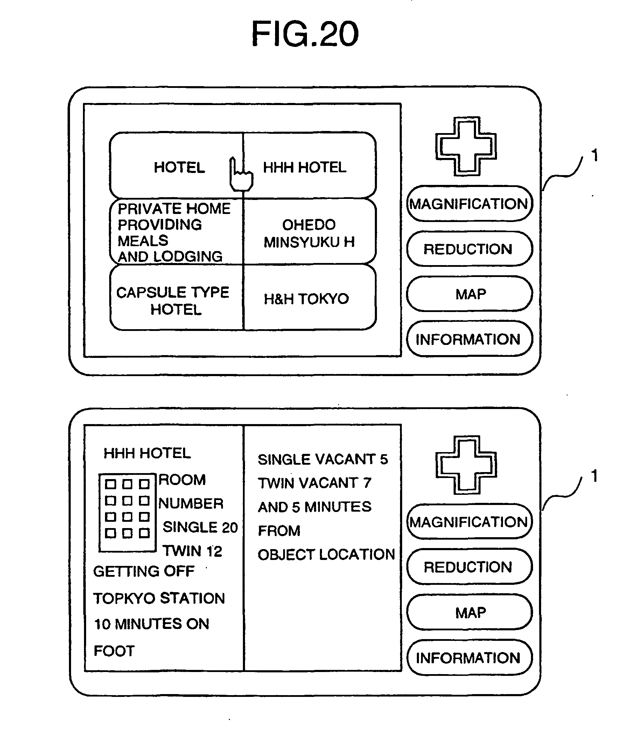

A detailed data display means 69 transmits a command to display the detailed information that was taken out by the inside data retrieval means 68, to graphics processing means 59. Otherwise, it takes out the receipt information corresponding to the icon selected from the icon select means 67 from the received data / location memory means 66, transmits the command to display this to the graphics processing means 59. Then, the receive data may be displayed according to a display format contained beforehand in the received data. The detailed information taken out from the inside data retrieval means 68 and the receipt information corresponding to the icon selected are selectively displayed according to a request from the user by a user operation analysis means 50. Otherwise, the detailed information with a disposition decided beforehand and the receipt information may be displayed so as to be overlapped. Besides, in the information stored in the inside information memory 13, a display method of the receipt information is set beforehand, and the detailed information and the receipt information may be displayed according to this setting. Figure 20 is an example, in which, the detailed information in the information selected and the receipt information are displayed so as to be overlapped. Is this example, the icon is represented by the property and the name of the individual information, and the location of the icon is disposed in line in the screen, and it may displayed with an icon like an image thereof on the map.

An arithmetic processing department 10 relates to a navigation system processing to control amount of the information to be communicated so as to be suitable by the present invention furthermore, and to display the received information intelligibly, and has a select icon emphasis means 70, a detailed data display domain setting means 71 and a screen configuration change means 72.

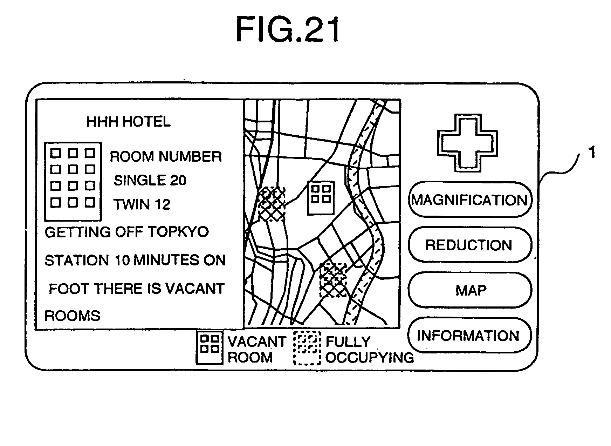

The select icon emphasis means 70 controls the icon property setting means so that the icon which the user selected by the icon select means 67 may distinguish the other icon on the screen. The icon property setting means 65 is set so as to change the property of the icon, for example, by changing a color of the selected icon, by raising a intensity of the selected icon, by flashing on and off the selected icon, by reducing the intensity of the icon which isn't selected, or by stopping the display of the icon which isn't selected (transparent color). Figure 21 shows an example in which the intensity of the icon which wasn't selected is reduced .

The detailed data display domain setting means 71 sets a domain for indicating the detailed data so that the detailed information taken out with the inside data retrieval means may be displayed to a location on the screen set beforehand. For example, as exemplified in figure 21, left half of the screen is assigned as a domain for displaying the detailed data. As another embodiment is exemplified in figure 1, the location of the selected icon is retrieved from the receive data / location memory means and the domain which does not cover the location is obtained to be set.

As the screen configuration changes when displaying the detailed information to the screen with the detailed data display domain setting means 71, a screen configuration change means 72 sets the display domain of the map according to this change, too. For example, when the detailed information is displayed on the left half of the screen, the map is to be displayed in the remaining right half. Then, because the location of the icon selected by the user is given, the screen configuration change means are set to scroll the map so that the selected icon comes into a center of right half of the screen, and the icon related to the detailed information is displayed in the central neighborhood of the map, thereby peripheral map information are easily understand. Figure 21 shows an embodiment which displays the icon and the detailed information related thereto as stated above. This embodiment is effective for the user when the user selects one of the icon and watches the detailed information. On the other hand, For example, when the detailed information which wants to watch is successively selected by the icon according to the movement of the cursor, it become difficult to watch it because the scroll of the map occurs whenever the selected icon is changed in sequence. In such a case, it is better to set not to scroll the map even if the detailed information is displayed, and, for example, as shown in figure 1, the detailed information is displayed so that the map is kept to be fixed and the selected icons do not overlap.

In the construction stated above, the detailed data display means 69 is provided to transmit the command to display the detailed information to a screen location set by the detailed data display domain setting means 71, to the graphics processing means 59.

Being constructed in this way, Detailed information of the icon which a user selected may be displayed keeping the icon displayed on the map, and furthermore, the objected icon is distinguished from other icons easily, the detailed information display which is easy to be understood very much may be provided.

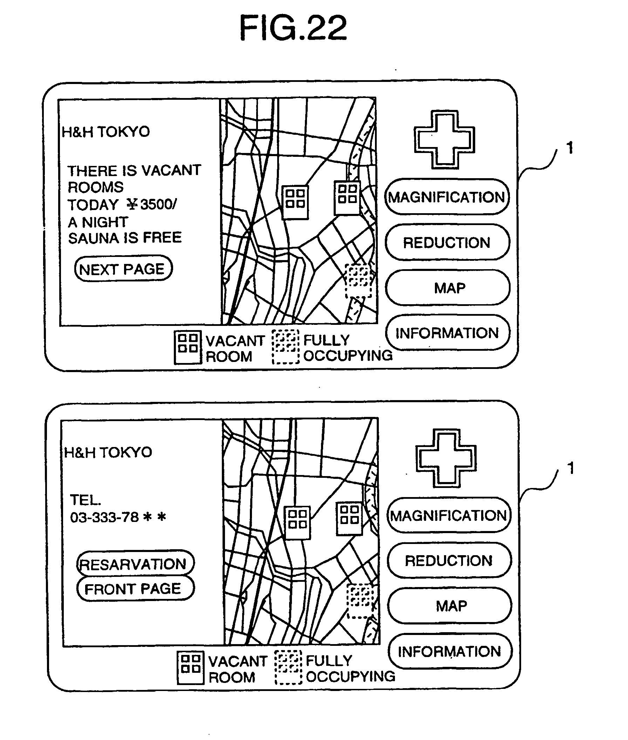

In the above embodiment, a case that the detailed data become bigger than the domain set by detailed data area setting means, isn't assumed. This is because it is expected that the information is provided to a driver especially. In other words, when bigger data than a domain are expected to be displayed, an operation to let the displayed data moved becomes necessary, and a burden of the user is increased. Actually, a case to want to display more data is expected however. In an embodiment which solves this problem, the detailed information is divided into several pages, each of which become smaller than the domain where is set by the detailed data area setting means, and a display means to show existence of the former page or the next page is provided, and the page is constructed to be changed according to a request by the user, thereby the burden of the user is decreased. In figure 22, a case that the information is displayed into two pages is shown. In such a construction as above, it is understood easily that the scroll operation by the user is performed only for a map. Accordingly when the user operation analysis means detects a scroll operation by the user, it is processed to order to scroll only the map.

Furthermore, after having displayed intelligibly in the present invention as above stated, the arithmetic processing department 10 has a screen configuration memory means 73 having a function to return to former display.

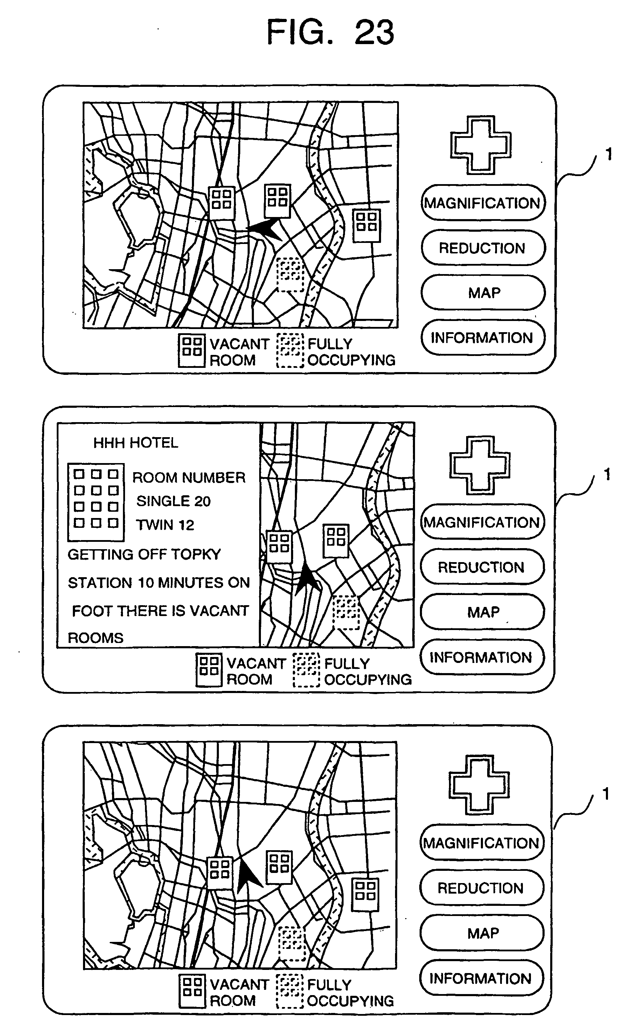

A screen configuration memory means 73 stores how to displays it on the screen according to the operations by the user, such as start to display of the received information, selection of the icon, closing of information display by user operation analysis means 50 , thereby it operates to return to the display state displayed formerly. For example, a case that the user demanded an information of a hotel of an objected position neighborhood from the information offering equipment will be explained by using figure 23. If a plane map which a present position is located in a center to display the whole screen at a point in time when the user demands the information, screen information is such as " right before information request, total plane map display, present position center " are stored. In order to show the demanded information, after having displayed the information of the hotel which is vacant with an icon, the user pushes " map " button so as to return to an original map screen by finishing the display of the information, thereby, the screen information is such as " right before information request, total plane map display, present position center " are transmitted to the map display domain setting means 53, the total screen returns to display the present position in the center of the map. In the above embodiment, the user does a change of the screen configuration, however, it may be assumed that change timing may be replaced after a predetermined time has passed, or it may be replaced when velocity of the car becomes faster than a predetermined value.

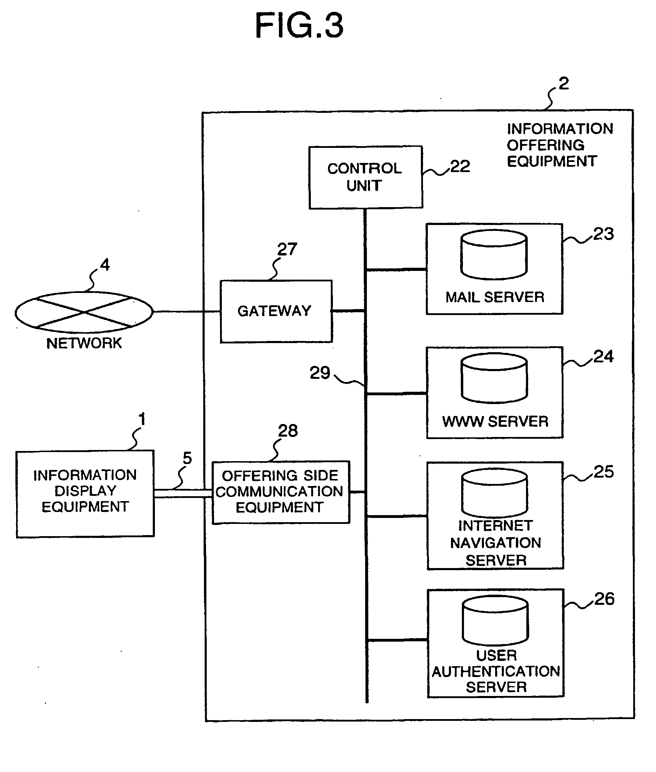

The information offering equipment 2 will be explained using figure 3.

The information offering equipment 2 has a mail server 23, a WWW server 24, an internet navigation server 25, a user authentication server 26, a control unit 22, a gateway 27 and an offering side communication equipment 28.

The gateway 27 has a unique address which is discriminated from other equipment connected to the network 4, it is connected with the network 4 and lead to communicate with the information offering server which is communicated with the network 4 , and it receives an information that has been sent through network 4 to the information offering equipment.

The offering side communications equipment 28 communicate with the information display equipment 1 so as to send or receive the information.

The mail server 23 stores an electronic mail sent to the user who is capable to access to the information offering equipment 2 and outputs the electronic mail which is received according to request of the user.

The WWW server 24 stores the information is such as a letter, a sound or a voice, a standstill drawing, and an animation, according to a format decided beforehand, and provides an information stored according to a request of the user.

The internet navigation server 25 stores the information provided through the gateway 27 and the offering side communication device with a format decided beforehand in order to indicate it on the information display 1, and outputs it to the information display 1 by request of the user. The internet navigation server 25 receives the updating information from the information offering server 3, and stores the received updating information instead of the corresponding old information, and updates the information so that the information to offer to the information display 1 becomes to be new continuously.

The user authentication server 26 stores an information of the user who is capable to access to the information offering equipment 2 or an information to manage the service that the information offering equipment 2 may offer to every user, and is capable to limit the user who demand to connect or to limit the service provided to the user through the gateway 27 and the offering side communications equipment 28.

The control unit 22 controls the various servers 23, 24, 25, 26, the gateway 27, and the offering side communications equipment 28, and offers an electronic mail service performed in the world of a network such as internet etc. and a WWW (World Wide Web) service etc.. Furthermore, the information that the user demands is offered by processing as that the information provided to the information display equipment 1 is collected through network 4 , by processing as that the collected information is stored in the network 4, by processing as that the corrected information is changed into a suitable information formality in order to transmit and display it to the information display equipment, and by processing as that the information demanded by the user is referred to be taken out from the internet navigation server, and by processing as that a retrieve result is transmitted to the information display equipment.

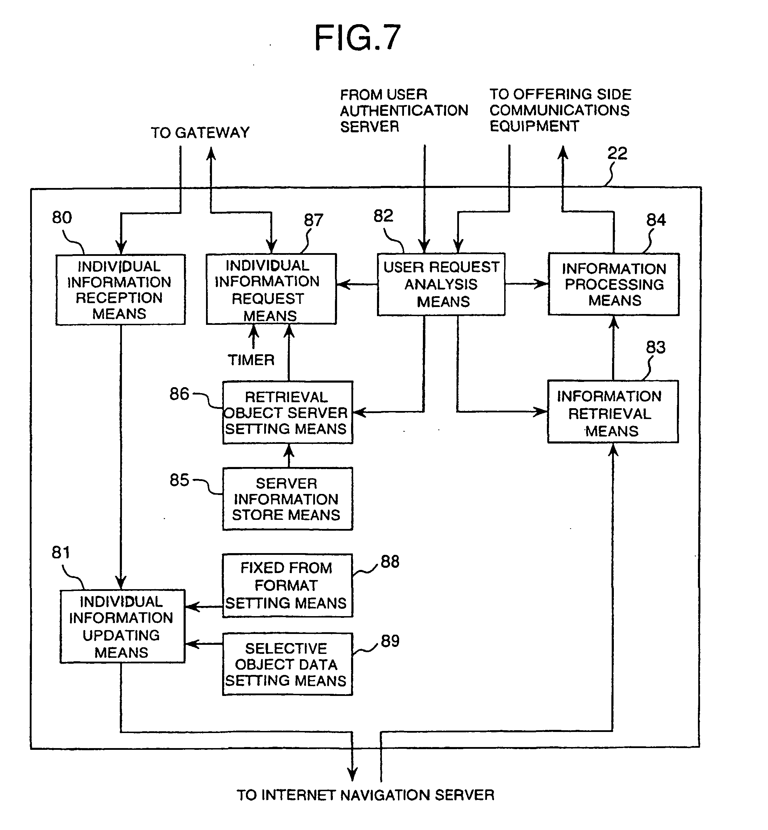

A configuration of the function means of control unit 22 is explained using figure 7.

As shown in figure 7, the control unit 22 relates to a means for the navigation system processing in which the information provided to the information display equipment 1 is collected, the amount of the information to transmitted in this invention is optimized, and the received information is displayed intelligibly by the user, and has an individual information reception means 80, an individual information updating means 81, a user request analysis means 82, an information retrieval means 83 and an information processing means 84.

The individual information reception means 80 receives the individual information which the information offering server provided on the network top sends to the information offering equipment 2 through the gateway 27.

The individual information updating means 81 stores the individual information which is received by the individual information reception means 80 in the corresponding domain of the internet navigation server.

The user request analysis means 82 analyzes the request of the user based on the data sent from the information display equipment 1 and controls each unit in the control unit in order to execute the request. For example, when the request to offer vacant information has been sent together with a retrieve items such as coordinate of object position and hotel, the information is transmitted to the information retrieval means and a necessary information is retrieved from the internet navigation server 25 to be transmitted to the information display equipment 1. Then, a registration information of the user who is capable to receive the service offered by the information offering equipment 2 is stored in the user authentication server 26, an identification data of the user is obtained from the information display equipment 1, and the service that doesn't fit to a condition is operated not to be executed based on these information, thereby, for example, when a service charging a fee is prepared, it becomes impossible to prevent the user from escaping the charging of the fee.

The information retrieval means 83 searches the information that the user needs from the internet navigation server 25 according to the retrieval item that has been sent from the information display 1 and hands the search results to the information processing means 84. As mentioned above, the retrieval item sent from the information display 1 may include the conditions such as on business or available to be utilized. Such conditions may not be set in the information display 1, and the information retrieval means 83 may set it in the search condition automatically.

The information processing means eight 4 converts the plural information searched by the information retrieval means 83 into the data that the information display 1 is capable to process, and hands the converted data over to the offering side communication device 28, thereby, the retrieval information becomes to be possible to be indicated with the information display 1. In order to realize optimization of the communicated information amount that is a distinctive characteristics of the present invention, the information which is updated with a low frequency such as the brief description of the facility is eliminated from the individual information to be sent to the information display 1. In addition to above, according to the environment of the information display, for example, situation whether the moving body is in moving or in stopping, the communicated information amount changes so that intermission of the communication line changes, and the reduction of the information may be executed by judging the change. For example, as it is possible to understand whether the moving body is moving or not may be shown with the information display 1, and the information offering device 2 is notified of the effect when stopping, and the information processing means 84 is operated not to control the information reduction. The information processing means 84 may be operated to change the amount of the information to be transmitted to the information display 1. For example, maximum amount of the information to transmit may be set beforehand, the communicated information amount sent by one time is transmitted not to exceed the maximum amount, or a processing to make the size of the image is performed when the image data are sent. Moreover, the data reduction process as above is decided to be operated by obtaining the information as that the situation of the information display 1, for example, the setting car is running or not, the communications means is PHS or a cellular phone, and the display 11 of information display 1 is large or small.

The above configuration example premises that the information is sent from the information offering server 3. Furthermore, a configuration of the control unit 22 that is capable to demand the individual information will be explained when the information offering equipment 2 directly access in the information offering server 3 The control unit 22 has a server information store means 85, a retrieve object server setting means 86 and an individual information request means 87 furthermore.

The server information store means 85 stores the information such as kind and contents, address, access method of the information that may be offered by every information offering server 3.

The retrieve object server setting means 86 sets the information offering server 3 in order to obtain the information necessary for the internet navigation server 25 based on the information stored by the server information store means 85. Then, in a case that the user request analysis means 82 is operated to obtain the information by accessing the information offering server 3 at a point in time when the user requests the information, the information offering server 3 which is capable to offer the information requested by the user, may be retrieved so as to be set. When being constructed in this way, as it becomes possible to access the information offering server 3 which is necessary and minimum when the information is necessary, burden of the network may be reduced.

The individual information request means 87 accesses the information offering server 3 set as the retrieve object and outputs the request to offer the information. The timing for requesting an information offering may be obeyed to the indication by a timer which promotes a request starting in a time set previously, or the user request analysis means 82 operates to obtain the information by accessing the information offering server 3 at the point in time when the user request the information, and the timing may be a point in time when the retrieve object server setting means 86 sets the retrieve object server.

In the example constituted as above, it is premised that the information that has been sent from the information offering server 3 are respectively optimized. Furthermore, in the information offering equipment 2, a construction which make the information stored in the internet navigation server 25 most suitable will be explained.

The control unit 22 has a fixed form format setting means 88 and a selection object data setting means 89 furthermore.

The fixed form format setting means 88 sets a format of the information stored in the internet navigation server 25, and makes for the individual information updating means 81 to be possible to update the information of the internet navigation server 25 according to this format. For example, as shown in figure 14, the format is provided to fit to the information display equipment 1.

A selection object data setting means 89 sets whether the information is renewed according to every property of the information, and makes for the individual information updating means 81 to be possible to update the information of the internet navigation server 25 according to this setting. For example, if the information sent from the information offering server are divided in to several files, an extent that may be stored in the internet navigation server is sets utilizing the extent determined depending on the property.

In the above embodiment, the information offering equipment 2 is constituted expecting to send the information into the information display equipment 1, however, as the internet navigation server is one kind of the server too. Therefore, a construction as that the user on the internet accesses the information on the internet navigation server, may be provided, or other construction as that the user of the information display equipment 1 accesses the server on the network except the information offering equipment 2 through this information offering equipment 2, may be provided.

Because, the information is sent from the information offering server connected to through a network when the information is updated, if the information sent is stored, the latest information may be stored. Furthermore, as the necessary information may be obtained by accessing the necessary information offering server on a timing that the user wants, the latest information may be accessed in this case too. Relating to the information provided to the user and sent from the information offering equipment to the information display equipment, the amount of the data is reduced at need, thereby it becomes possible to transmit the information in a short time, or communication by using a cellular telephone system becomes possible.

The information that is sent from the information offering equipment is displayed with an icon on the corresponding map top by using a location information of the information, the location of the information is easily understood, and because only of the icon is display, the gaze of the user isn't needed, it is easy for the driver to understand it. Because the detailed information of the corresponding information is displayed by selecting the icon displayed, the user may get the needed information by an minimum operation with a good retrieve efficiency. When there is detailed information in the information display equipment, it is possible to provide enough information for the user by showing the detailed information, and as there is no need to send the detailed information from the information offering equipment, communication amount of the data decreases, and it becomes possible to transmit it in a short time and the cellular telephone system becomes easy to be utilized still more.

## Claims

1. A navigation display system for displaying a specified location on a map, comprising:
- a map memory (12) for storing map data;
- a map display (11) for displaying said map using said map data;
- retrieval condition setting means (60) for setting up a retrieval condition corresponding to an icon on said map to be displayed on said map display (11); and
- a communication equipment (21) for transmitting said retrieval condition to an information offering equipment (2) and for receiving information which is retrieved according to said retrieval condition in said information offering equipment (2) and is transmitted from said information offering equipment (2);
said navigation display system being **characterized by** comprising:
- an icon retrieving device (62) for retrieving shape information of said icon according to said retrieval condition from said map memory (12), and for demanding said communication equipment (21) when said icon retrieving device (62) may not retrieve said shape information from said map memory (12) so as to make said information offering equipment (2) retrieve said information including said shape information of said icon according to said retrieval condition; and
- an icon display means (64) for displaying said icon based on said shape information at a position on said map corresponding to an icon position information, wherein
said received information includes position information and shape information of said map icon.

2. A navigation display system as defined in claim 1, wherein said retrieval condition comprises a central position of retrieved area of said map.

## Patentansprüche

1. Ein Navigationsanzeigesystem zum Anzeigen eines bestimmten Ortes auf einer Karte mit:
- einem Kartenspeicher (12) zum Speichern von Kartendaten;
- einer Kartenanzeige (11) zum Anzeigen der Karte unter Verwendung der Kartendaten;
- einer Bezugsbedingungseinstelleinrichtung (60) zum Einstellen einer Bezugsbedingung entsprechend einem Symbol auf der Kartenanzeige (11) anzuzeigenden Karte; und
- einer Kommunikationseinrichtung (21) zum Übermitteln der Bezugsbedingung an eine Informationsanbieteeinrichtung (2) und zum Empfangen von Informationen, die entsprechend der Bezugsbedingung in der Informationsanbieteinrichtung (2) bezogen werden und von der Informationsanbieteinrichtung (2) übertragen werden;
wobei das Navigationsanzeigesystem **dadurch gekennzeichnet ist, dass** es enthält:
- eine Symbolbezugseinrichtung (62) zum Beziehen von Forminformationen des Symbols entsprechend den Bezugsbedingungen aus dem Kartenspeicher (12) und zum Anfordern der Kommunikationseinrichtung (21), wenn die Symbolbezugseinrichtung (62) die Forminformationen aus dem Kartenspeicher (12) nicht beziehen kann, um so die Informationsanbieteinrichtung (2) die Information inklusive der Forminformation des Symbols entsprechend den Bezugsbedingungen beziehen zu lassen; und
- eine Symbolanzeigeeinrichtung (64) zum Anzeigen des Symbols basierend auf den Forminformationen an einer Position auf der Karte die einer Symbolpositionsinformation entspricht, wobei
- die empfangenden Informationen Positionsinformationen und Forminformationen des Kartensymbols enthalten.

2. Ein Navigationsanzeigesystem wie in Anspruch 1 definiert, wobei die Bezugsbedingung eine zentrale Position von bezogenen Flächen der Karte enthält.

## Revendications

1. Système d'affichage de navigation pour afficher un emplacement demandé sur une carte, comprenant :
- une mémoire de carte (12) pour stocker des données de carte ;
- un écran de visualisation de carte (11) pour afficher ladite carte en utilisant lesdites données de carte ;
- un moyen de sélection d'une condition de recherche (60) pour constituer une condition de recherche correspondant à une icône sur ladite carte à afficher sur ledit écran de visualisation de carte (11) ; et
- un équipement de communication (21) pour transmettre ladite condition de recherche à un équipement de proposition d'informations (2) et pour recevoir les informations qui sont trouvées en fonction de ladite condition de recherche dans ledit équipement de proposition d'informations (2) et qui sont transmises depuis ledit équipement de proposition d'informations (2) ;
ledit système d'affichage de navigation étant **caractérisé par le fait qu'**il comprend :
- un dispositif de recherche d'icône (62) pour rechercher des informations de configuration de ladite icône en fonction de ladite condition de recherche à partir de ladite mémoire de carte (12) et pour mettre à contribution ledit équipement de communication (21) s'il advient que ledit dispositif de recherche d'icône (62) ne retrouve pas lesdites informations de configuration à partir de ladite mémoire de carte (12), de manière à faire en sorte que ledit équipement de proposition d'informations (2) retrouve lesdites informations, dont lesdites informations de configuration de ladite icône conformément à ladite condition de recherche ; et
- un moyen de visualisation d'icône (64) pour afficher ladite icône sur la base desdites informations de configuration en une position sur ladite carte correspondant à des informations de position d'icône, dans lequel lesdites informations reçues comprennent les informations de position et les informations de configuration de ladite icône de carte.

2. Système d'affichage de navigation tel qu'il est défini dans la revendication 1, dans lequel ladite condition de recherche comprend une position centrale de zone retrouvée de ladite carte.
